# EUROPÄISCHE PATENTANMELDUNG

(11) **EP 2 452 775 A1**
(43) Veröffentlichungstag der Anmeldung: **16.05.2012**
(21) Anmeldenummer: 10191308.5
(22) Anmeldetag: 16.11.2010
(51) Int. Cl.: B23K 26/38, B23K 15/08, B23K 101/00

(54) **Verkürztes Bohrverfahren eines Lochs**

(71) Anmelder: SIEMENS AKTIENGESELLSCHAFT, 80333 München (DE)
(72) Erfinder: Kaiser, Axel, 41462 Neuss (DE); Massa, Andrea, 12157 Berlin (DE); Wilkenhöner, Rolf, 14532 Kleinmachnow (DE); Wollnik, Adrian, 13585, Berlin (DE)

(57) **Zusammenfassung**

Um die Bearbeitungszeit beim schichtweisen Abtrag eines Lochs (7) zu verkürzen, wird vorgeschlagen, dass das Material nur im Randbereich (10) abgetragen wird, wobei sich auch dieser Randbereich zur Tiefe hin verkleinert.

## Beschreibung

Die Erfindung betrifft ein verkürztes Bohrverfahren beim Herstellen eines Lochs.

Laser- oder Elektronenstrahlkanonen werden häufig verwendet, um Vertiefungen oder Löcher in Bauteile einzubringen. Dies können metallische oder keramische Bauteile sein oder Schichtsysteme mit äußeren keramischen Schichten und metallischem Substrat wie z.B. bei Turbinenschaufeln von Dampf- oder Gasturbinen.

Bei Turbinenschaufeln werden oft durch eine keramische Schicht Durchgangslöcher erzeugt, wobei der äußerste Bereich innerhalb der keramischen Schicht eine Diffusorform aufweist. Nach dem Stand der Technik wird schichtweise über den gesamten Querschnitt des Lochs abgetragen, um das Loch zu erzeugen.

Dies ist sehr zeitaufwändig.

Es ist daher Aufgabe der Erfindung ein Verfahren aufzuzeigen, mit dem das Herstellungsverfahren verkürzt werden kann.

Die Aufgabe wird gelöst durch ein Verfahren gemäß Anspruch 1.

Es zeigen:
- Figur 1, 2, 3, 4, 5, 6: schematische Darstellungen des erfindungsgemäßen Ablaufs,
- Figur 7: eine Gasturbine,
- Figur 8: eine Turbinenschaufel,
- Figur 9: eine Brennkammer,

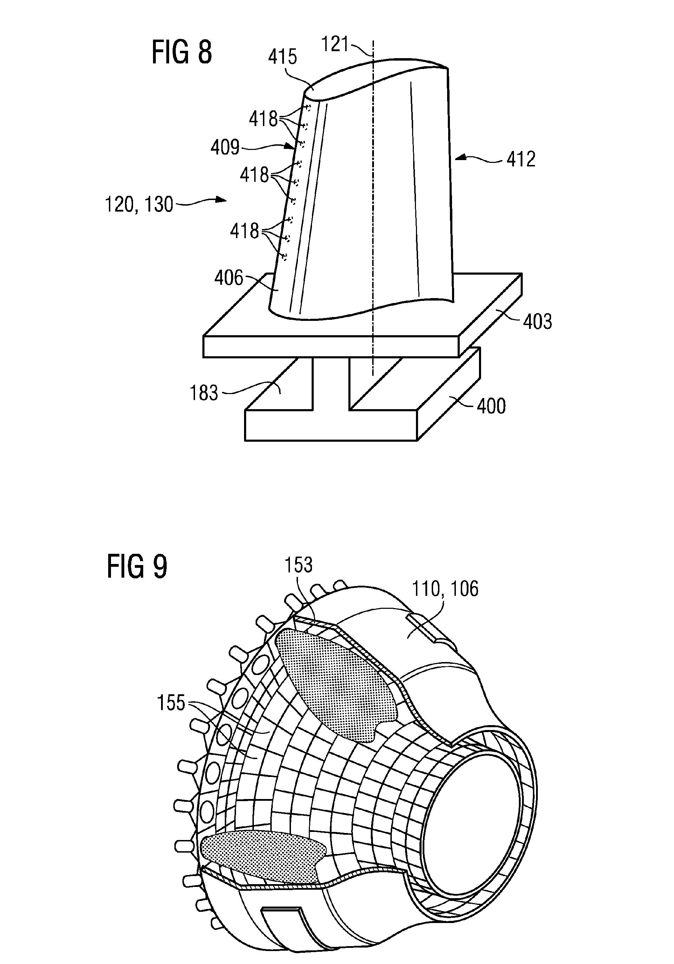

- Figur 9: eine Liste von Superlegierungen.

Die Beschreibung und die Figuren stellen nur Ausführungsbeispiele der Erfindung dar.

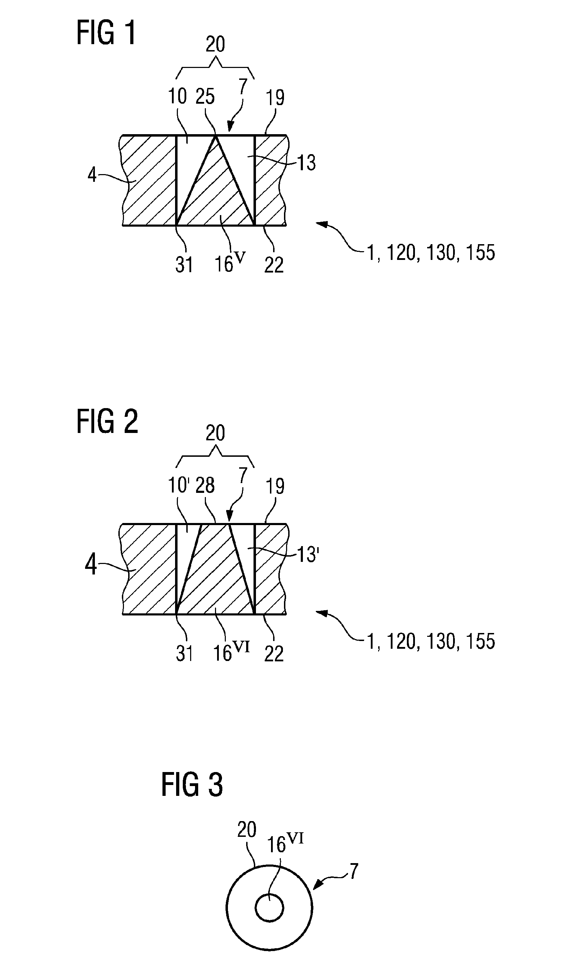

Die Figur 1 zeigt ein Bauteil 1, 120, 130, 155, in dem ein Loch 7, insbesondere ein Durchgangsloch, in dem Substrat 4 erzeugt werden soll.

Das Loch 7 kann senkrecht oder unter einem Winkel (nicht dargestellt) zur äußeren Oberfläche 19 des Substrats 4 verlaufen.

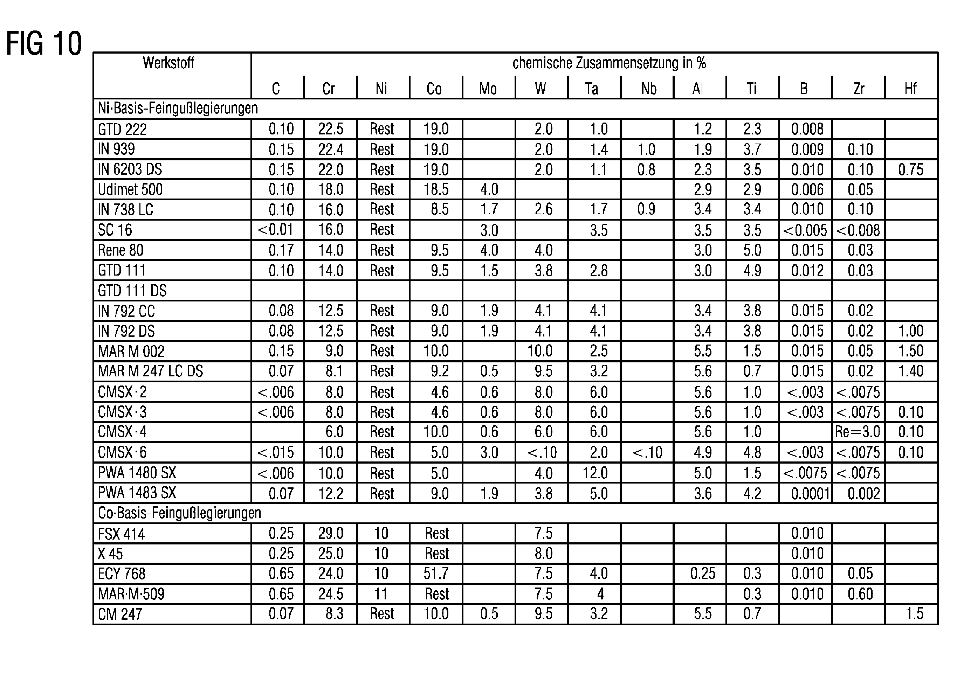

Das Substrat 4 weist insbesondere bei Turbinenschaufeln 120, 130 eine nickel- oder kobaltbasierte Superlegierung (Fig. 10) auf.

Zur Herstellung des Lochs 7 wird ausgehend von der äußeren Oberfläche 19 des Substrats 4 Material schichtweise in einem Bereich 20 des herzustellenden Lochs 7 abgetragen, aber nicht über die gesamte Querschnittsfläche des Lochs 7. Somit wird in dem Bereich 20, in dem das Loch 7 entsteht, nur bereichsweise Material schichtweise abgetragen. Dies geschieht vorzugsweise durch ein Trepanierverfahren, insbesondere mit einem Nanosekundenlaser. Dabei wird vorzugsweise der Laserstrahl über die abzutragende Fläche 10 verfahren, insbesondere in Mäanderform.

Am Ende des Verfahrens verbleibt vorerst ein innerer Kern 16, insbesondere dessen Querschnittsfläche sich zur inneren Oberfläche 22 oder der Oberfläche 19 gegenüberliegenden Seite im nächsten Bearbeitungsschritt vergrößert.

Dabei kann der verbleibende Kern 16^{V} in dem Loch eine Spitze 25 oder, wie in Figur 2 dargestellt, einen Stumpf 28 aufweisen. Das Ende 25, 28 ist vorzugsweise nahe der Oberfläche 19 vorhanden, kann aber auch unterhalb der Oberfläche 19 liegen. Dabei erstreckt sich der Kern 16, 16' vorzugsweise von der äußeren Oberfläche 19 bis zur inneren Seite 22.

In einem jeweils letzten Bearbeitungsschritt gemäß Figur 1, 2 kann der Kern 16^{V}, 16^{VI} ausgebrochen werden oder es wird entlang der Umfangslinie 31 die Verbindung zwischen Kern 16^{V}, 16^{VI} und Substrat 4 durchtrennt.

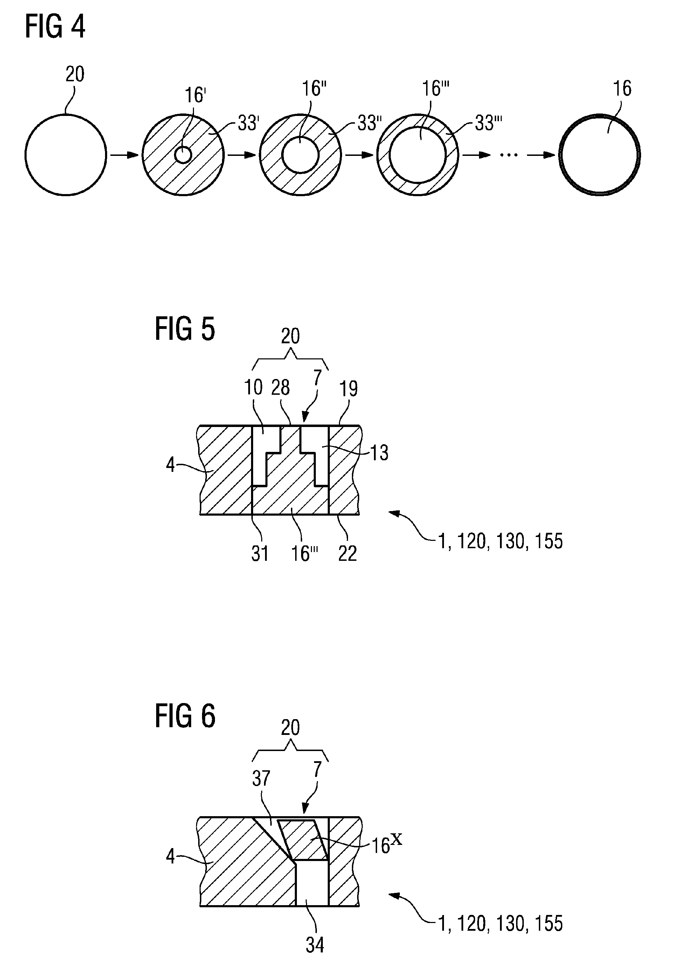

Ebenso kann durch ein Laser-Perkussionsverfahren der Kern 16^{V}, 16^{VI} entfernt werden und ggf. anschließend ein unterer Teil des Lochs 7 (siehe auch Fig. 6), da dies einfacher und schneller abläuft und die inneren Oberflächen bereits akkurat erzeugt wurden.

Die Bearbeitung kann allgemein durch einen Laser oder eine Elektronenstrahlkanone und deren Laser- bzw. Elektronenstrahl erfolgen.
Dies erfolgt vorzugsweise durch ein Trepanierverfahren, insbesondere für den oberen Teil 37 des Lochs 7 (Fig. 6).

Die Figur 3 zeigt eine Aufsicht auf die Figur 2.
Das Loch 7 kann jeden beliebigen Querschnitt an der Oberfläche 19 aufweisen. Dies gilt auch für die Figuren 1, 4, 5, 6.

Figur 4 zeigt eine Aufsicht auf ein herzustellendes Loch 7 während des Ablaufs des Verfahrens zur Herstellung eines Lochs 7 gemäß Figur 1, 2, 5 oder 6.
Dabei wird die schraffierte Fläche in dem Bereich 20 in einer Ebene 33', 33", 33''', schichtweise abgetragen. Die abgetragene Fläche stellt eine Mantelform dar, wobei die von Ebene 33', 33'', ... zu Ebene 33'', 33''', ... hin vorzugsweise immer kleiner wird, bis zum Schluss der Umfang des Lochs 7 mit dem Umfang des Kerns 16 vorzugsweise fast deckungsgleich ist.
Der Ablauf des Verfahrens ist schematisch mit einem runden Querschnitt dargestellt. Für jeden beliebigen Querschnitt gilt analog, dass der Querschnitt des verbleibenden Rests des Kerns 16 zum Innern hin oder hin zur Tiefe des herzustellenden Lochs 7 vorzugsweise immer größer bzw. die Fläche, an der Materialabtrag stattfindet, immer kleiner wird.

Der Querschnitt des Kern 16, der vorzugsweise einen Dorn 16^{V}, 16^{VI} bildet, kann kegelförmig (Fig. 1, 2) oder stufenförmig ausgebildet sein (Fig. 5).

Vorzugsweise wird nur ein oberer Teil 37 eines Lochs 7 mit diesem Verfahren hergestellt.
Dies ist bei Turbinenschaufeln ein Diffusor 37, dessen Querschnitt sich zur Oberfläche hin von einer gewissen Tiefe vom Substrat aus vergrößert (Fig. 6). Hier verringert sich die abzutragende Fläche auch, jedoch bedingt durch die Asymmetrie des Diffusors ist der restliche Kern 16^{X} nicht zwangsläufig dornförmig ausgebildet.
Der untere Abschnitt 34 kann vorzugsweise durch ein Perkussionsverfahren erzeugt werden.

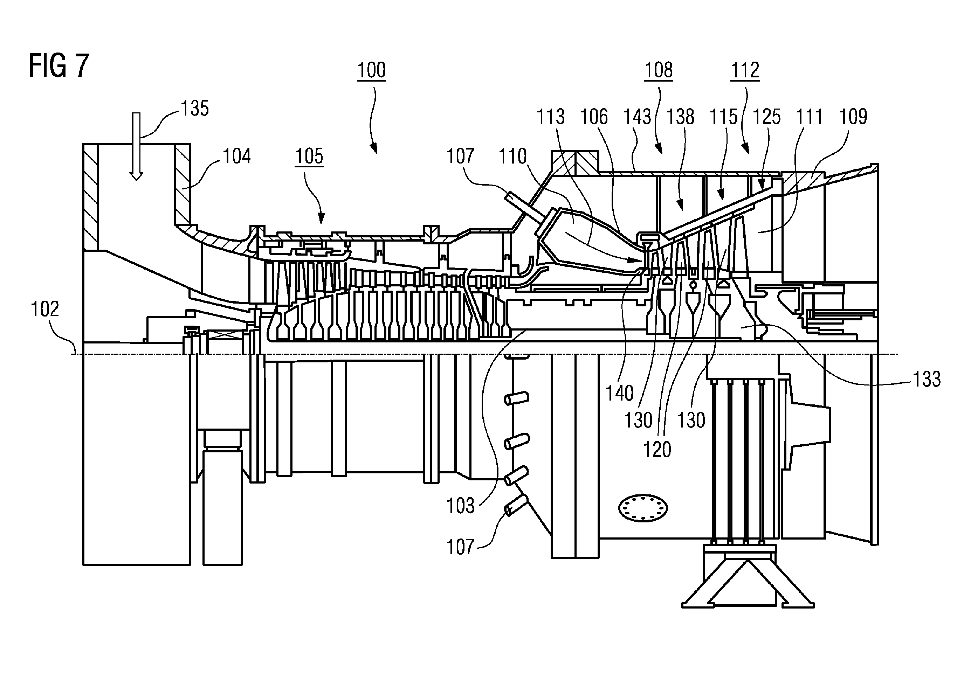

Die Figur 7 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).
Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 9 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zur Herstellung eines Lochs (7),
insbesondere eines Durchgangslochs,
wobei in dem Bereich (20) des herzustellenden Lochs (7) Material entfernt wird, aber im Innern ein Kern (16) vorerst zurückbleibt und dann der Kern (16) entfernt wird.

2. Verfahren nach Anspruch 1,
wobei sich der Querschnitt des abzutragenden Bereichs für das Loch (7) von abgetragener Schicht zu abgetragener Schicht hin verkleinert.

3. Verfahren nach Anspruch 1 oder 2,
bei dem das herzustellende Loch (7) an der Oberfläche (19) breiter ist als im Inneren.

4. Verfahren nach einem oder mehreren der Ansprüche 1, 2 oder 3,
bei dem nur ein oberer Teil (32) eines Lochs (7), insbesondere ein Diffusor hergestellt wird,
insbesondere wobei der obere Teil (32) eine Trichterform aufweist.

5. Verfahren nach einem oder mehreren der Ansprüche 1, 2, 3 oder 4,
bei dem ein Dorn (16') im Loch (7) als Kern (16) gebildet wird.

6. Verfahren nach einem oder mehreren der Ansprüche 1, 2, 3, 4 oder 5,
bei dem ein Laser zur Herstellung des Lochs (7) verwendet wird.

7. Verfahren nach einem oder mehreren der Ansprüche 1, 2, 3, 4, 5 oder 6,
bei dem ein Trepanierverfahren verwendet wird, insbesondere mit einem Nanosekunden-Laser.

8. Verfahren nach einem oder mehreren der Ansprüche 1 bis 7,
bei dem das Material schichtweise abgetragen wird, insbesondere durch mäanderförmiges Verfahren des Laserstrahls des Lasers.

9. Verfahren nach Anspruch 1 oder 5,
bei dem der Kern (16) entlang einer Umfangslinie (31) aus dem Loch (7) herausgetrennt wird.

10. Verfahren nach einem oder mehreren der Ansprüche 1, 2, 3, 4, 5, 6, 7, 8 oder 9,
bei dem das Loch (7) in einem Schichtsystem aus keramischer und/oder metallischen Schicht und/oder metallischem Substrat hergestellt wird.

11. Verfahren nach einem oder mehreren der vorhergehenden Ansprüche,
bei dem sich ein unterer, konstanter oder symmetrischer Teil (34) an den oberen Teil (37) des Lochs (7) anschließt.

12. Verfahren nach Anspruch 11,
bei dem der untere Teil (34) durch ein Perkussionsverfahren hergestellt wird,
insbesondere mit einem Millisekunden-Laser.

13. Verfahren nach einem oder mehreren der vorhergehenden Ansprüche,
bei dem der obere Teil (37) durch ein Trepanierverfahren hergestellt wird,
insbesondere mit einem Nanosekunden-Laser.

14. Verfahren nach einem oder mehreren der vorhergehenden Ansprüche,
bei dem der Kern (16) durch ein Perkussionsverfahren herausgearbeitet wird.
